# EUROPEAN PATENT SPECIFICATION

(11) **EP 0 314 643 B1**
(45) Date of publication and mention of the grant of the patent: **01.06.1994**
(21) Application number: 88830443.3
(22) Date of filing: 25.10.1988
(51) Int. Cl.: F16H 3/66

(54) **An epicyclic power-shift unit with three speed ratios for tractor gearboxes**
Epizyklische Kraftschaltgetriebeeinheit mit drei Geschwindigkeitsverhältnissen für Traktorgetriebe
Unité de changement de vitesse épicycloidale à commande assistée avec trois rapports de vitesses pour transmission de tracteur

(30) Priority: 26.10.1987 IT 6789487
(43) Date of publication of application: 03.05.1989
(73) Proprietor: SAME S.p.A., I-24047 Treviglio (Bergamo) (IT)
(72) Inventor: Massaccesi, Gianni, I-24047 Treviglio (Bergamo) (IT)
(74) Representative: Marchitelli, Mauro

(56) References cited:
- FR-A- 2 339 788
- FR-A- 2 602 294
- US-A- 3 147 643
- US-A- 3 799 003

## Description

The present invention relates in general to epicyclic power-shift assemblies with three speed ratios for tractor gearboxes.

The invention more particularly concerns an epicyclic power-shift assembly comprising an input shaft to which a ring gear is coupled for rotation, a planet carrier mounted coaxially and rotatably on the input shaft and carrying a series of planet gears with two sets of teeth, of which one meshes with the ring gear and with a first sun gear rotatable coaxially with the input shaft and the other meshes with a second sun gear rotatable coaxially with the input shaft, a friction clutch having a drum coupled for rotation with the planet carrier, and a power-shift unit including three hydraulically-operated friction clutches provided with respective friction discs and respective pressure plates, of which the first is engageable to make the planet carrier fast with the ring gear, the second to lock the first sun gear against rotation, and the third to lock the second sun gear against rotation so as to achieve three different speed ratios of the assembly, fast, slow and normal respectively.

In the power-shift unit of the assembly, the three friction clutches can be engaged and disengaged in combination in generally known manner to vary the transmission ratio of the assembly without interrupting the transmission of torque.

The object of the present invention is to produce an epicyclic power-shift assembly of the type defined, which is provided with devices adapted to ensure, on the one hand, its more efficient operation and, on the other hand, a considerably simplified construction and assembly in comparison with current epicyclic power-shift assemblies.

According to the invention, this object is achieved by virtue of the fact that the friction discs of the first, second and third friction clutches are identical, in that the pressure plates of the second and third friction clutches are identical, and in that a ring of thrust springs is interposed between the pressure plates of the second and third friction clutches and tends to keep the third friction clutch engaged and the second friction clutch disengaged, the pressure plates having corresponding axial holes in which axial pins are engaged for equalising the reaction torques on the plates.

The standardisation of the friction discs of the three clutches and of the pressure plates of the second and third clutches enables the production costs of the assembly to be reduced. Moreover, the presence of the thrust springs ensures that, when the engine is being started (and hence there is no pressure in the hydraulic power-shift circuit) and when the planet carrier and therefore the drum of the friction starting clutch are stationary, dangerous rates of rotation do not occur within the epicyclic assembly.

According to another characteristic of the invention, the first friction clutch includes an operating piston which has a respective thrust chamber and is rotatable with the ring gear, a preloaded Belleville washer acting on the piston and tending to counteract the hydraulic pressure produced in the thrust chamber by centrifugal action.

The coupling of the operating piston for rotation with the ring gear, and hence with the input shaft of the assembly, enables the further simplification of the construction of the assembly, allowing it to be preassembled, with the friction starting clutch, in a casing which acts as a spacer between the engine and the gearbox casing of the tractor.

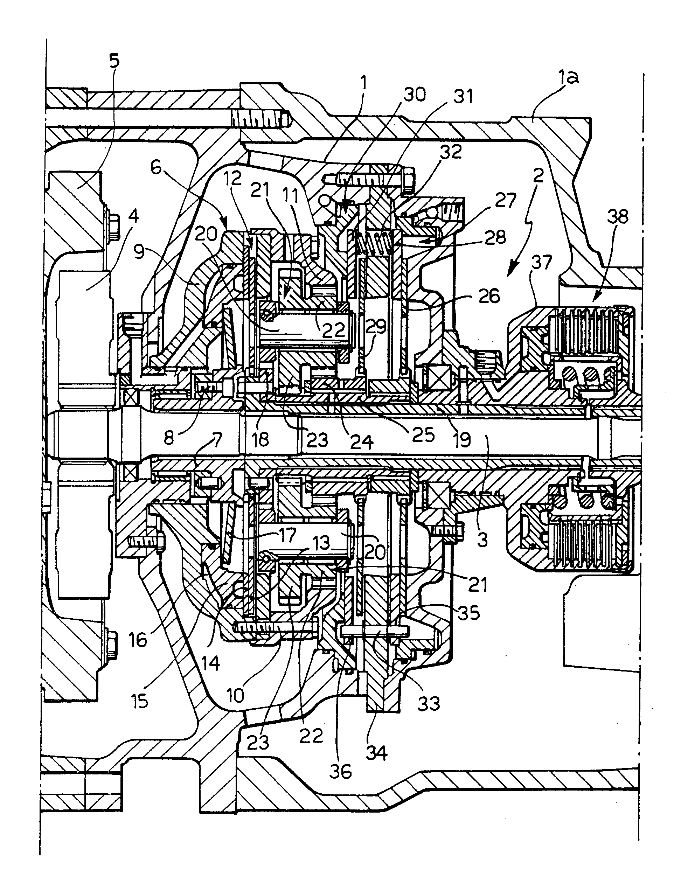

Further characteristics and advantages of the present invention will become clear from the detailed description which follows with reference to the appended drawing, provided by way of non-limiting example, which shows an epicyclic power-shift assembly according to the invention schematically in axial section.

With reference to the drawings, a spacer between the engine and the casing 1a containing the gearbox of a tractor is indicated 1.

An epicyclic power-shift assembly 2 with three speed ratios is housed in the spacer 1 and is normally assembled before its insertion in the casing 1a.

The assembly 2 includes an input shaft 3 provided at its outer end with a torsional coupling 4 rotated by a fly-wheel 5 which is driven by the driving shaft (not illustrated) of the tractor.

The epicyclic assembly 2 includes an input member, generally indicated 6, including a splined hub 7, normally of steel, which is coupled to the input shaft 3 and to which a drum 9, normally of cast iron, is fixed by means of screws 8, a ring gear 11 being fixed in turn to the drum by means of screws 10.

A first hydraulically-operated friction clutch 12 is situated in the drum 9 and includes a friction disc 13 and a pressure plate 14 operated by a piston 15 which rotates together with the drum 9. The piston 15 has an associated pressure chamber 16 to which pressurised hydraulic fluid is supplied through a hydraulic power-shift operating unit. A Belleville washer 17 which tends to move the piston 15 and the pressure plate 14 away from the friction disc 13 is provided to compensate for the hydraulic pressure due to the centrifugal force within the thrust chamber 16. The Belleville washer 17 is preloaded upon assembly, by the tightening of the screws 8 connecting the hub 7 to the drum 9.

The friction disc 13 of the first friction clutch 12 is carried by a planet carrier 18 which is fast with a hollow shaft 19 mounted rotatably and coaxially on the input shaft 3 and constituting the output shaft of the epicyclic assembly 2.

The planet carrier 18 carries a plurality of axial pins 20, normally three, which are equiangularly spaced about the axis of the shaft 3 and on each of which is rotatably mounted a planet gear 21 having a first set of teeth 22 and a second set of teeth 23 with different numbers of teeth. The sets of teeth 22 of the planet gears 21 mesh on one side with the ring gear 11 and on the other side with a first sun gear 24, whilst the second sets of teeth 23 mesh with a second sun gear 25. The second sun gear 25 is freely rotatable on the hollow shaft 19 coupled to the planet carrier 18, and carries a friction disc 26 of a third hydraulically-operated, friction power-shift clutch 27, whose pressure plate is indicated 28.

The first sun gear 24 is freely rotatable on the second sun gear 25 and carries a friction disc 29 of a second hydraulic, friction power-shift clutch 30 whose pressure plate is indicated 31.

The friction discs 13, 29 and 26 of the three clutches 12, 30 and 27 are identical, as are the pressure plates 31 and 28 of the two clutches 30 and 27. A ring of helical compression springs 32 is interposed between the pressure plates 31 and 28 and tends to keep the third clutch 27 in the engaged condition and the second friction clutch 30 in the disengaged condition. This ensures that dangerous rates of rotation do not occur in the epicyclic assembly 2 when the tractor engine is started, and hence there is no pressure in the hydraulic circuit supplying the three clutches 12, 30 and 27, and when the output shaft 19 is stationary.

In order to equalise the reaction torque on the two pressure plates 28 and 31, there is provided a ring of axial pins 33 which pass through an annular plate 34 fast with the casing 1 and are engaged in corresponding holes 35 and 36 in the two pressure plates 28, 31.

The hollow output shaft 19 transmits the rotary motion of the assembly 2 to a drum 37 of a friction starting clutch 38 which is operable by means of the clutch pedal of the tractor. This friction starting clutch 38 is normally pre-assembled on the spacer 1 with the epicyclic assembly 2 before insertion in the casing 1a.

The input shaft 3 is used for operating the gears of the power take-off of the tractor, as well as for rotating the epicyclic assembly 2.

In operation, the drive enters the epicyclic unit 2 from the ring gear 11 through the shaft 3, the hub 7 and the drum 9, and is output by the hollow shaft 19 carrying the planet carrier 18. The engagement of the first friction clutch 12 makes the planet carrier 18 fast with the ring gear 11, achieving a transmission ratio of 1:1 (fast speed). The engagement of the second friction clutch 30 causes the sun gear 24 to be locked against rotation and achieves the slow transmission ratio (for example, 1:1.444), and the engagement of the third friction clutch 27 causes the locking of the sun gear 25 against rotation and the achievement of the normal gear ratio (for example, 1:1.1885). The engagement and disengagement of the three clutches 12, 30 and 27 is combined in generally known manner by means of the hydraulic power-shift unit, so that the variation of the transmission ratio of the assembly 2 takes place without interrupting the transmission of torque.

## Claims

1. An epicyclic power-shift assembly with three speed ratios for tractor gearboxes, comprising an input shaft (3) to which a ring gear (11) is coupled for rotation, a planet carrier (18) mounted rotatably and coaxially on the input shaft (3) and carrying a series of planet gears (21) with two sets of teeth (22, 23), of which one (22) meshes with the ring gear (11) and a first sun gear (24) rotatable coaxially with the input shaft (3) and the other (23) meshes with a second sun gear (25) rotatable coaxially with the input shaft (3), a friction starting clutch (38) having a drum (37) coupled for rotation with the planet carrier (18), and a power-shift unit including three hydraulically-operated friction clutches (12, 30, 27) provided with respective friction discs (13, 29, 26) and respective pressure plates (14, 28, 31), the first (12) of which is engageable to make the planet carrier (18) fast with the ring gear (11), the second (30) to lock the first sun gear (24) against rotation, and the third (27) to lock the second sun gear (25) against rotation so as to achieve three different speed ratios of the assembly, fast, slow and normal respectively, characterised in that the friction discs (13, 29, 26) of the first, second and third friction clutches (12, 30, 27) are identical, in that the pressure plates (31, 38) of the second and third friction clutches (30, 27) are identical, and in that a ring of thrust springs (32) is interposed between the pressure plates (31, 28) of the second and third friction clutches (30, 27) and tends to keep the third friction clutch (27) engaged and the second friction clutch (30) disengaged; the pressure plates (31, 28) having corresponding axial holes (36, 35) in which axial pins (33) are engaged for equalising the reaction torques on the plates (31, 28).

2. An epicyclic assembly according to Claim 1, characterised in that the first friction clutch (12) includes an operating piston (15) which has a respective thrust chamber (16) and is rotatable together with the ring gear (11), and in that a preloaded Belleville washer (17) acts on the piston (15) and tends to counteract the hydraulic pressure produced in the thrust chamber (16) by centrifugal action.

3. An epicyclic assembly according to Claim 1 or Claim 2, characterised in that it is preassembled, together with the friction starting clutch (38), in a casing (1) which acts as a spacer between the engine and the gearbox casing of the tractor.

## Patentansprüche

1. Kupplungsvorrichtung für Planetengetriebe mit drei Übersetzungsverhältnissen für Traktorengetriebe, wobei die Vorrichtung eine Antriebswelle (3), mit der ein Ringzahnrad (11) für eine Drehung gekuppelt ist, einen Planetenradträger (18), der auf der Antriebswelle (3) drehbar und koaxial befestigt ist und eine Reihe von Planetenrädern (21) mit zwei Reihen von Zähnen (22, 23) trägt, von denen eine Reihe (22) mit dem Ringzahnrad (11) und mit einem ersten Sonnenrad (24) in Eingriff steht, das koaxial mit der Antriebswelle (3) drehbar ist, und von denen die andere Reihe (23) mit einem zweiten Sonnenrad (25) in Eingriff steht, das koaxial mit der Antriebswelle (3) drehbar ist, eine Anfahr-Reibungskupplung (38), die eine Trommel (37) besitzt, die sich mit dem Planetenradträger (18) dreht, sowie eine Kupplungseinheit enthält, die drei hydraulisch betätigte Reibungskupplungen (12, 30, 27) aufweist, die mit entsprechenden Friktionsscheiben (13, 29, 26) sowie entsprechenden Anpreßplatten (14, 28, 31) versehen sind, wobei die erste Kupplung (12) eingerückt werden kann, um den Planetenradträger (18) mit dem Ringzahnrad (11) fest zu machen, die zweite Kupplung (30) eingerückt werden kann, um das erste Sonnenrad (24) gegen eine Drehung zu verriegeln, und die dritte Kupplung (27) eingerückt werden kann, um das zweite Sonnenrad (25) gegen eine Drehung zu verriegeln, um drei verschiedene Übersetzungsverhältnisse der Vorrichtung zu erhalten, d.h. schnell, langsam bzw. normal, dadurch gekennzeichnet, daß die Friktionsscheiben (13, 29, 26) der ersten, zweiten und dritten Reibungskupplung (12, 30, 27) ident sind, daß die Anpreßplatten (31, 38) der zweiten und dritten Reibungskupplung (30, 27) ident sind, und daß ein Ring von Druckfedern (32) zwischen den Anpreßplatten (31, 28) der zweiten und dritten Reibungskupplung (30, 27) liegt, der trachtet, die dritte Reibungskupplung (27) eingerückt und die zweite Reibungskupplung (30) ausgerückt zu halten; wobei die Anpreßplatten (31, 28) entsprechende axiale Öffnungen (36, 35) besitzen, mit denen axiale Zapfen (33) in Eingriff gebracht werden, um die Gegendrehmomente auf die Platten (31, 28) auszugleichen.

2. Planetengetriebevorrichtung gemäß Anspruch 1, dadurch gekennzeichnet, daß die erste Reibungskupplung (12) einen Arbeitskolben (15) aufweist, der eine entsprechende Druckkammer (16) besitzt und sich zusammen mit dem Ringzahnrad (11) drehen kann, und daß eine vorgespannte Tellerscheibe (17) auf den Kolben (15) wirkt, die trachtet, jenem Hydraulikdruck entgegenzuwirken, der in der Druckkammer (16) von der Zentrifugalkraft erzeugt wird.

3. Planetengetriebevorrichtung gemäß Anspruch 1 oder 2, dadurch gekennzeichnet, daß sie zusammen mit der Anfahr-Reibungskupplung (38) in ein Gehäuse (1) vormontiert wird, das als Zwischenstück zwischen dem Motor und dem Getriebegehäuse des Traktors dient.

## Revendications

1. Ensemble épicycloïdal à changement servocommandé à trois rapports de vitesse pour boîtes de vitesse de tracteurs comprenant un arbre d'entrée (3) auquel une couronne dentée (11) est accouplée en rotation, un porte-satellites (18) monté rotatif et coaxialement sur l'arbre d'entrée (3) et qui porte une série de pignons satellites (21) possédant deux jeux de dents (22, 23), dont l'un (22) engrène avec la couronne dentée (11) et avec une première roue planétaire (24) qui peut tourner coaxialement à l'arbre d'entrée (3) et dont l'autre (23) engrène avec une deuxième roue planétaire (25) qui tourne coaxialement à l'arbre d'entrée (3), un embravage à friction (38) de démarrage possédant un tambour (37) couplé pour la rotation avec le porte-satellites (18) et une unité de servocommande de changement comprenant trois embrayages à friction (12, 30, 27) à commande hydraulique équipés de disques de friction (13, 29, 26) respectifs et de plateaux de pression (14, 28, 31) respectifs, dont le premier (12) peut être serré pour rendre le porte-satellites (18) solidaire de la couronne dentée (11), le deuxième (30) pour bloquer la première roue planétaire (24) contre la rotation et le troisième (27) pour bloquer la deuxième roue planétaire (25) contre la rotation, de manière à obtenir trois rapports de vitesse différents pour l'ensemble, à savoir un rapport rapide, un rapport lent et un rapport normal respectivement, caractérisé en ce que les disques de friction (13, 29, 26) des premier, deuxième et troisième embrayages à friction (12, 30, 27) sont identiques, en ce que les plateaux de pression (31, 38) des deuxième et troisième embrayages à friction (30, 27) sont identiques et en ce qu'une couronne de ressorts de poussée (32) est interposée entre les plateaux de pression (31, 28) des deuxième et troisième embrayages à friction (30, 27) et tend à maintenir le troisième embrayage à friction (27) serré et le deuxième embrayage à friction (30) desserré, les plateaux de pression (31, 28) ayant des trous axiaux (36, 35) correspondants dans lesquels sont engagées des goupilles axiales (33) servant à égaliser les couples de réaction sur les plateaux (31, 28).

2. Ensemble épicycloïdal selon la revendication 1, caractérisé en ce que le premier ensemble à friction (12) comprend un piston de commande (15) qui a une chambre de poussée respective (16) et peut être entraîné en rotation avec la couronne dentée (11), et en ce qu'une rondelle Belleville précontrainte (17) agit sur le piston (15) et tend à résister à la pression hydraulique qui est engendrée dans la chambre de poussée (16) par la force centrifuge.

3. Ensemble épicycloïdal selon la revendication 1 ou la revendication 2, caractérisé en ce qu'il est pré-assemblé, avec l'embrayage à friction de démarrage (38), dans un boîtier (1) qui joue le rôle d'une entretoise entre le moteur et le carter de la boîte de vitesses du tracteur.
